Europäisches Patentamt

European Patent Office

Office européen des brevets

(19)

(11) Publication number: 0 077 405

A1

# EUROPEAN PATENT APPLICATION

published in accordance with Art. 158(3) EPC

(21) Application number: 82901163.4

(22) Date of filing: 26.04.82

Data of the international application taken as a basis:

(86) International application number:
PCT/JP82/00140

(87) International publication number:
WO82/03798 (11.11.82 82/27)

(51) Int. Cl.³: B 01 J 19/08
B 23 K 26/00, G 03 H 1/00

(30) Priority: 27.04.81 JP 62396/81

(43) Date of publication of application:
27.04.83 Bulletin 83/17

(84) Designated Contracting States:
AT BE CH DE FR GB LI LU NL SE

(71) Applicant: TOYAMA, Jun
4-11, Mejiro 2-chome
Toshima-ku Tokyo 171(JP)

(72) Inventor: TOYAMA, Jun
4-11, Mejiro 2-chome
Toshima-ku Tokyo 171(JP)

(74) Representative: Dreiss, Hosenthien & Fuhlendorf
Gerokstrasse 6
D-7000 Stuttgart 1(DE)

(54) METHOD AND DEVICE FOR MANUFACTURING PRODUCT BY UTILIZING HOLOGRAPHY TECHNIQUE.

(57) Method of directly manufacturing a product using holographic techniques to geometrize information, and a machine tool according to the same method. A conventional machine tool manufactures a desired product by cutting a mineral material solidified in the prescribed shape with a cutting edge, a laser or the like, and is an external machining method. Accordingly, it is limited by its design from directly manufacturing a complicated or topological product such as something with an internal structure. This invention overcomes this disadvantage. By the application of a holographic technique capable of arbitrarily performing a spatial distribution of electromagnetic or sonic wave as the wave energy, the design information of the product obtained in advance can be obtained as a spatial energy distribution, the design information of the three dimensional product is solidified through the sublimation of gasified material utilizing the difference between the high and the low wave energies in the spatial distribution, e.g., the temperature difference, thereby directly manufacturing the product.

FIG.6

SPECIFICATION

## TITLE OF THE INVENTION

A Process for Producing Products Using Holography Technology and an Apparatus Thereof

## TECHNICAL FIELD

This invention relates to a process for directly producing desired products using holography technology which enables the geometrization of information and also to an apparatus thereof.

## BACKGROUND OF THE INVENTION

Conventional machine tools generally proposed have been based on the manufacturing processes in which a mineral raw material is melted and refined to produce a material, which is solidified into a certain form, and is cut by cutting tools or laser, and the machine tools themselves have had a limited performance for processing the work. Some conventional machine tools were, therefore, difficult to materialize products having complicated internal structures, or topological structures directly, because of the inevitable limitation in the stage of designing.

## DESCRIPTION OF THE INVENTION

This invention has solved the disadvantages that said conventional machine tools have inevitably. The object of the present invention is to provide a novel process and apparatus for producing products by realizing the design information of products as a spatial energy distribution by utilizing holography, e.g., the technology of computer holography, which can optionally realize the spatial distribution of wave energies such as electromagnetic and sound waves, and by substantiating the design information which has been made spatial by utilizing the difference of levels of said wave energy in the spatial distribution, usually the resultant temperature difference, causing the sublimation of the gasified desired material. By the present invention, products having complicated internal structures or topological structures, or minute products can be produced in an easy and direct way.

## BRIEF DESCRIPTION OF DRAWING

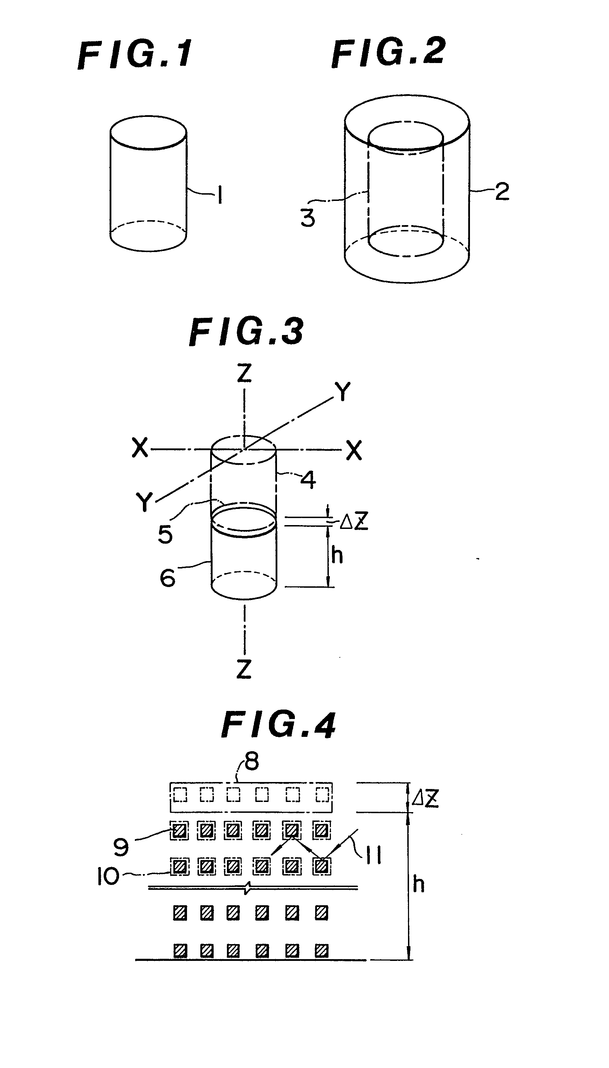

Fig. 1 is a perspective view showing the form of a columnar product temporarily selected as a real image of computer holography. Fig. 2 is a perspective view showing the space of the shape of a product as an inverse space of the space of a holography real image. Fig. 3 is a perspective view showing the method of section lamination.

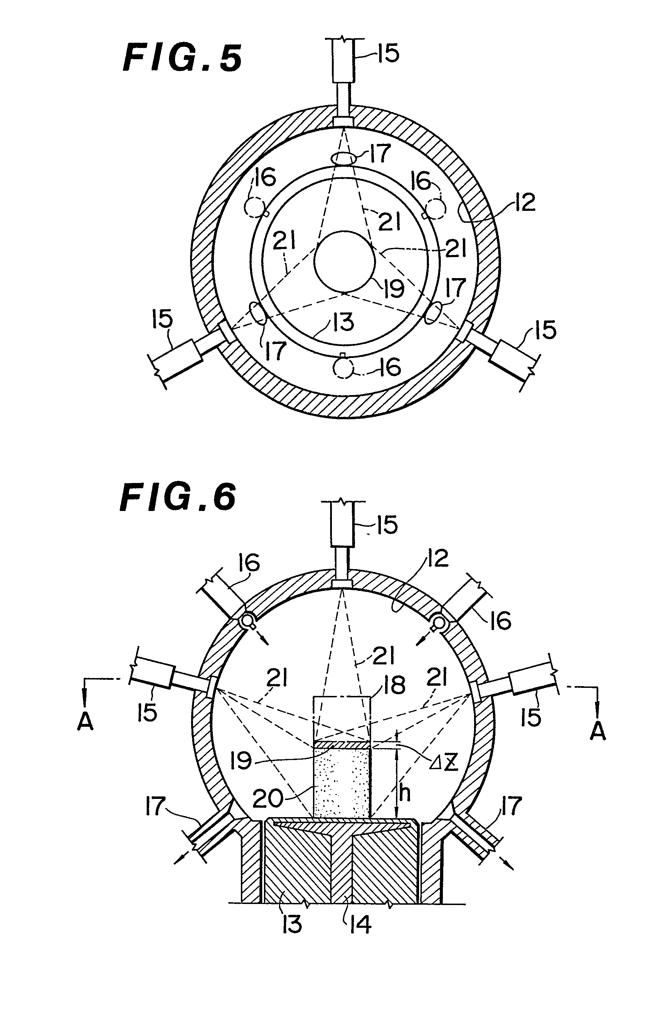

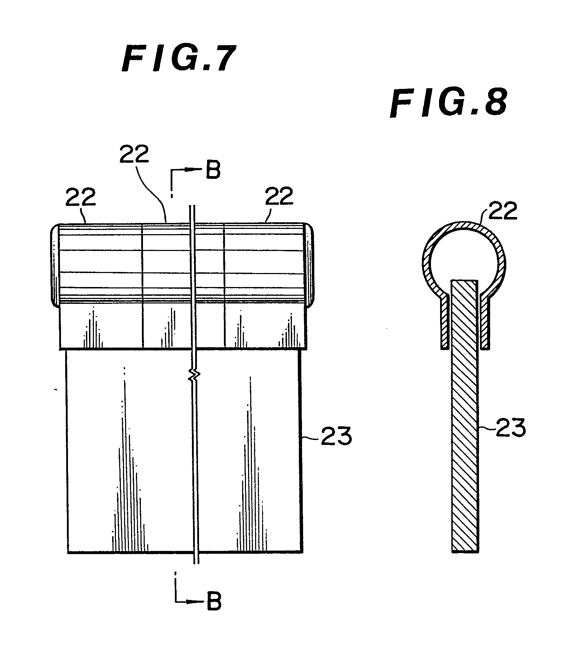

Fig. 4 is an enlarged sectional view showing the detail of the internal structure of Fig. 3. Fig. 5 is a transverse sectional view showing an embodiment of the apparatus of the present invention (shown as the A-A line sectional view of Fig. 6). Fig. 6 is a vertical sectional view of the apparatus of the present invention. Fig. 7 is a front view showing another embodiment of the apparatus of the present invention. Fig. 8 is a B-B line sectional view of Fig. 7.

## THE BEST FORM OF THE INVENTION

The present invention will become apparent from the following description with reference to the accompanying drawings.

Generally, holography using laser can synthesize three-dimensional real images in space. The present invention is based on this principle, in which the design data of a product previously obtained are processed by a computer, practically, a fixed or temporarily or continuously varying hologram by diagramming said design data, said hologram is allowed to be a real image as a hologram called a computer hologram by radiating for instance a coherent light as the actual-size geometrical information of the product in the three-dimensional space, and the desired product is produced by converting said real image into an actual substance.

The production of hologram and the radiation of a coherent light to said hologram is only a method of reproducing the design data of the product in the desired three-dimensional space, and it is also possible to use other methods for the realization of said design data.

The fundamental principle for materializing the real image as a geometric information is the utilization of the temperature difference of the space produced by holography. Here, the low density part of the laser beam has a relatively low temperature, and the high density part thereof has a relatively high temperature. Therefore, when the temperature difference of laser beams is produced in a vacuum by holography, and the gasified material filled in these spaces is cooled from one side, said material is sublimed, or crystallized, in the space having a relatively lower temperature, and substantiated as the shape of said space. Here, since the space in which said material is substantiated corresponds to said space having a low temperature, the inverse space 3 of the real image of holography (the real image part has a high temperature because the laser beam has a high density) should be the space with a low temperature. That is, the real image 1 of the product (the space with a high temperature) is produced in the real image.

When the vapor of the material is crystallized, it must be ensured that the vapor sublimes (from gas to solid) and does not melt (or liquefy) in the process of crystallization. This is for two reasons. The first reason is that the liquid is difficult to control by the process and apparatus of the present invention. The second reason is that crystals after passing the liquid state are of a lower property as the material.

In order to make the vapor sublime, therefore, it is necessary to make sure to conduct "cooling control" and "heating control" properly. This is also important for obtaining the exact shape of the product, that is, if the substantiated part of the product grows in an irregular shape in undesired zones, such a part is sublimed, or gasified, by heating to maintain the regular shape.

Cooling control is conducted as follows: Conduction is used for cooling the crystallized zone, and the crystals formed are cooled from an end. The relative cooling effect may be obtained by avoiding supplying laser beams or gaseous materials to said zone.

Heating control is conducted as follows: Heating is carried out in the real-imaged part of laser beam holography. In this case, the "limited space heating" method is used as a means for energy saving on heating for preventing the irregular growth of crystals in already substantiated parts.

As Fig. 4 shows, the growth of irregular crystals can be controlled by heating the space 10 surrounding the crystallized part 9. When the partial extinction of laser beams from different directions due to mutual interference is to be avoided, the method by "pulse laser beams" or the method by "scanning successively shifting the heated space", or the combination thereof is used.

There are two methods to supply laser beams to the required space. The first method is the "method by ultrashort-wave laser holography such as gamma ray holograhy", and the real image can be produced in the desired space permeating through the already crystallized and substantiated space by the use of such holography having permeability. The second method is the "method using reflected beams at the surface of the substantiated part". As Fig. 4 shows, the beams of light 11 incident from the opening surrounding the product reflect from the surface of the internal crystals and reach various parts. The reason why this method is effective is that the path of laser beams reflected can be calculated because the shape produced by computer laser holography has been known as design information.

The "section lamination method" is useful for products with complicated internal structures or large products. As Fig. 3 shows, this is the method for producing the product 4 by substantiating sections 5 having a thickness of $\Delta z$, and by growing said sections successively as frost columns. This method is also effective for adjusting the quality of crystals by evenly supplying the gaseous material and by controlling the rate of crystallization.

For improving workability, the means to prevent vibration is required in order to produce an exact image in the specified location in space and to crystallize the material at said location. To accomplish these requirements, the structure having an anti-vibration support mechanism using the "three-dimensional suspension" (Patent Application No. 56-025421) enabling expansion and contraction with a restoring force to three-dimensional directions.

An example of holography machine tools using the above methods is next described with reference to conceptional drawings.

Fig. 5 is a plan showing the main part of said example (a plan of the A-A direction of the example shown in Fig. 6), and Fig. 6 is a vertical sectional view thereof. A table 13 on which the product 18 is placed is installed at the center of a work chamber 12 (e.g., a vacuum chamber). The design information of the product is spatialized by laser beams 21 radiated from laser holography lenses 15 installed on the internal wall of the chamber 12, and the gasified material is radiated from the gasified material feeding nozzle 16 toward the specified space. The gasified material is collected into the gasified material collecting nozzle 17, and is again radiated from the gasified material feeding nozzle 16 after adjusting temperature. In Figs. 5 and 6, the process for substantiating the part of a thickness of $\Delta z$ by the "section lamination method", and for growing said part as frost columns. In Fig. 6, the product is shown in three parts: the part which has already been substantiated 20, the part which is being substantiated 19 and the part which is to be substantiated 18. The conductor 14 is connected to the part which has already been substantiated 20 in order to cool the product. The table 13 moves up and down for adjusting the location of the product, and also works as an elevator to take out the product from the work chamber 12.

When the product is produced from plural materials such as alloys, gasified mixed materials are used. When some part of the product is produced from a different material, the gasified materials are fed with a time difference, or in another method, the gasified materials are fed to different spaces.

With regard to the heat resistance of the work chamber 12 and other parts, when the density of the gasified material such as a metal is small, a high heat resistance is not required because of a small amount of heat. As the rate of production is increased, however, higher heat resistance is required.

The embodiments of the apparatus of the present invention include:

(1)  an apparatus for producing products in a special work chamber 12, e.g., a vacuum chamber as shown in Figs. 5 and 6,

(2)  an apparatus for producing in ordinary atmosphere or in vacuum space without using a vacuum work chamber, and

(3)  an apparatus having a topological vacuum work chamber in between (1) and (2) above as shown in Figs. 7 and 8.

The embodiments of the process for substantiate the real image of holography which controls the cystrallization of gasified materials include:

(1)  a process using electromagnetic holography,

(2)  a process using sound-wave holography (Since sound waves do not travel in a vacuum, a medium such as an inert gas or a part of the product which has already been substantiated is used as a conductor of the sound waves.), and

(3)  a process using electron-beam holography.

## APPLICABILITY IN INDUSTRIES

The apparatus of the present invention is useful as a machine tool which allows easy and at-will production of works of complicated internal structures or topological structures, or minute products which have not been capable of being produced by conventional machine tools. By the use of the present invention, the freedom and variation in the design of the products can be expected.

WHAT IS CLAIMED IS

1. A process for producing products using the technology
of holography, comprising the realization of the design
information of the products as the spatial distribution
of energy using the technology of holography which can
realize the spatial distribution of wave energies such
as electromagnetic and sound waves in a certain three-
dimensional spatial region, and the substantiation of
said spatialized design information of the products by
the sublimation of a material gasified using a difference
in the energy levels of said wave energies in the spatial
distribution, normally temperature difference.

2. A process for producing products using the technology
of holography as claimed in Claim 1, comprising the
use of a technology known as computer holography as the
technology of holography.

3. A process for producing products using the technology
of holography as claimed in Claims 1 and 2 comprising
the inhibition of growth of irregular crystals in the
substantiated part by heating the limited space surrounding the crystallized part alone.

4. A process for producing products using the technology
of holography as claimed in Claims 1 through 3 comprising the avoidance of partial extinction of laser beams
radiated from plural directions due to interference by

- 11 -

the use of pulse laser beams or the scanning means capable of successively shifting the heated space, or the combination thereof.

5. A process for producing products using the technology of holography as claimed in Claims 1 through 4 comprising the formation of a real image through the space which has already been crystallized and substantiated using ultrashort wave laser holography such as gamma ray laser holography.

6. A process for producing products using the technology of holography as claimed in Claims 1 through 4 comprising the formation of a real image in the desired space using the beams reflected from the surface of the substantiated part.

7. A process for producing products using the technology of holography as claimed in Claims 1 and 2 comprising the substantiation of products by successively subliming a gasified material as frost columns by the section lamination method.

8. An apparatus for producing products using the technology of holography comprising a table 13 for placing the product installed at almost the center of a work chamber 12, one or more than one laser holography radiating means 15 for radiating laser beams 21 into said work chamber 12 installed on the internal walls of said work chamber 12, one or more than one gasified material feeding nozzles 16 for injecting a gasified material toward the desired space, and one or more than one gasified material collecting nozzles 17 for collecting excessive gasified material in said space, said table 13 having a conductor 14 for controlling cooling.

9. An apparatus for producing products using the technology of holography as claimed in Claim 8 wherein said work chamber is a vacuum work chamber.

10. An apparatus for producing products using the technology of holography as claimed in Claim 8 wherein said work chamber is a topological vacuum work chamber.

**FIG.1**

**FIG.2**

**FIG.3**

**FIG.4**

## FIG.5

## FIG.6

**FIG.7**

**FIG.8**

## I. CLASSIFICATION OF SUBJECT MATTER (if several classification symbols apply, indicate all) 3

According to International Patent Classification (IPC) or to both National Classification and IPC

Int. Cl.$^3$   B01J 19/08, B23K 26/00, G03H 1/00

## II. FIELDS SEARCHED

### Minimum Documentation Searched 4

| Classification System | Classification Symbols |
|---|---|
| I P C | B01J 19/08–19/12, B23K 26/00, C30B 23/00, G03H 1/00–5/00, H01L 21/36 |

### Documentation Searched other than Minimum Documentation to the Extent that such Documents are Included in the Fields Searched 5

| | |
|---|---|
| Jitsuyo Shinan Koho | 1960 – 1981 |
| Kokai Jitsuyo Shinan Koho | 1971 – 1981 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| A | JP,A 51-73698 (Fujitsu Limited) 25. June. 1976 (25.06.76) Page 2, lower right column, line 18 to page 3, upper right column, line 1, Fig. 3(a), (b) | 1 |

* Special categories of cited documents: 15

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search 3 | Date of Mailing of this International Search Report 3 |
|---|---|
| June 9, 1982 (09.06.82) | June 21, 1982 (21.06.82) |
| International Searching Authority 1 | Signature of Authorized Officer 22 |
| Japanese Patent Office | |

Form PCT/ISA/210 (second sheet) (October 1977)